# EUROPÄISCHE PATENTSCHRIFT

(11) **EP 1 374 659 B1**
(45) Veröffentlichungstag und Bekanntmachung des Hinweises auf die Patenterteilung: **14.05.2008**
(21) Anmeldenummer: 03011968.9
(22) Anmeldetag: 28.05.2003
(51) Int. Cl.: A01B 29/04

(54) **Bodenwalze**
Soil roller
Rouleau pour sol

(30) Priorität: 20.06.2002 DE 10227384
(43) Veröffentlichungstag der Anmeldung: 02.01.2004
(73) Patentinhaber: Rabe Agri GmbH, 49152 Bad Essen (DE)
(72) Erfinder: Von Allwörden, Wilhelm, Dipl.-Ing., 49152 Bad Essen (DE); Lippert, Siegfried, 49152 Bad Essen (DE); Gerdom, Friedrich, Dipl.-Ing., 49152 Bad Essen (DE)
(74) Vertreter: Tappe, Hartmut

(56) Entgegenhaltungen:
- EP-A- 0 379 672
- EP-A- 0 682 854
- EP-A- 0 878 328
- EP-A- 1 033 266
- FR-A- 2 576 739
- FR-A- 2 784 331

## Beschreibung

Die Erfindung bezieht sich auf eine Bodenwalze, welche voneinander beabstandete parallel umlaufende Bodenverfestigungsringe aufweist. Aus dem Stand der Technik ist bekannt, daß hinter einem Bodenbearbeitungsgerät zur Saatbettbereitung eine Bodenwalze eingesetzt wird. Eine derartige Bodenwalze ist beispielsweise aus DE-OS 197 07 004 bekannt. Diese Bodenwalze besteht aus einem zentralen Tragrohr mit aufgeschobenen Bodenverfestigungsringen, welche voneinander parallel beabstandet sind. Zwischen den Bodenverfestigungsringen weist die Walze Abstandselemente auf, welche einen kleineren Außendurchmesser aufweisen als die Bodenverfestigungsringe. Die Verbindung zum Tragrohr erfolgt durch das Verpressen der Bodenverfestigungsringe mit den Abstandselementen, wobei die Bodenverfestigungsringe in ihrem Auflagebereich durch die schwalbenschwanzförmige Ausbildung gegen das Tragrohr gedrückt werden.

Der Erfindung liegt die Aufgabe zugrunde, eine betriebssichere Befestigung der Bodenverfestigungsringe auf dem zentralen Tragrohr in einfacher Weise zu ermöglichen.

Erfindungsgemäß wird die Aufgabe durch die Merkmale des Hauptanspruchs gelöst, die Unteransprüche zeigen weitere vorteilhafte Ausstattungsmerkmale der Erfindung.

Die erfindungsgemäße Bodenwalze zeichnet sich durch das Verpressen des Innenkonus vom Bodenverfestigungsring mit dem Außenkonus vom Abstandselement aus. Durch diese Verpressung wird das Abstandselement unterhalb des Konus an den Außenumfang des Tragrohres gedrückt und damit reibschlüssig verbunden.

Es ist vorteilhaft, wenn der Keilwinkel des Abstandselements kleiner oder gleich dem Keilwinkel des Verfestigungsringes ist. Dadurch werden die Bodenverfestigungsringe nahezu auf Endabstand fixiert.. Durch das axiale Verpressen der Abstandselemente mit den Bodenverfestigungsringen wird durch die Verzahnung am konischen Teil der Abstandselemente eine Verdrehsicherung zwischen den Abstandselementen und den Bodenverfestigungsringen ermöglichst. Die konische Verbindung zwischen den Abstandselementen und den Bodenverfestigungsringen verhindert beim Auftreten von hohen Seitenkräften ein seitliches Wegkippen der Bodenverfestigungsringe.

Zusätzliche Nasen am kleineren Durchmesser des Außenkonus der Abstandselemente sorgen für eine weitere Verzahnung zwischen den Bodenverfestigungsringen und den Abstandselementen.
Weitere Vorteile und Merkmale der Erfindung gehen aus den Unteransprüchen und den Zeichnungen hervor. Dabei zeigt:
- Fig. 1: die Bodenwalze nach dem axialen Verspannen der Bodenverfestigungsringe mit den Abstandselementen in Teilansicht und im Schnitt.
- Fig. 2: Bodenwalze nach dem axialen Verspannen der Bodenverfestigungsringe mit den Abstandselementen im vergrößerten Maßstab in Teilansicht und im Schnitt.
- Fig. 3: Bodenwalze nach dem axialen Verspannen der Bodenverfestigungsringe mit den Abstandselementen in Teilansicht und im Schnitt, wobei die Bodenverfestigungsringe mit einem Hohlraum versehen sind,.
- Fig. 4+5: Abstandselement in Kunststoffausführung als Teilansicht und im Schnitt mit Teilseitenansicht.
- Fig. 6: Bodenwalze nach dem axialen Verspannen der Bodenverfestigungsringe mit den Abstandselementen in Teilansicht und im Schnitt, wobei die Abstandselemente mit einem Versteifungselement versehen sind.
- Fig. 7+8: Bodenwalze nach dem axialen Verspannen der Bodenverfestigungsringe mit den Abstandselementen in Teilansicht und im Schnitt sowie in der Teilseitenansicht, wobei die Bodenverfestigungsringe mit einem Nockenkranz und einem Nockenring versehen sind.

Die Bodenwalze **1** besteht aus dem Tragrohr **2** mit jeweils am Ende des Tragrohres **2** angeordneten Tragrohrendplatten **3** und einer Lagerung **4**. Mittels der Lagerung **4** ist die Bodenwalze drehbar an einem nicht dargestellten Tragrahmen befestigt.

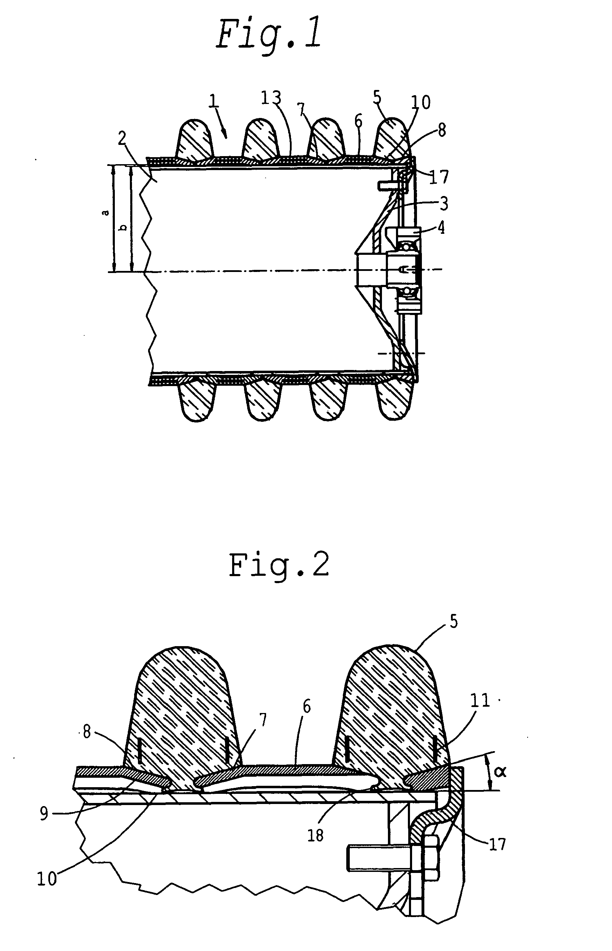

Die Bodenwalze **1** ist als Ringwalze mit abwechselnd über das Tragrohr **2** aufgeschobenen Bodenverfestigungsringen **5** und Abstandselementen **6** ausgebildet. Das leichte Aufschieben der Bodenverfestigungsringe **5** und der Abstandselemente **6** auf das Tragrohr **2** wird in unverpreßtem Zustand dadurch gewährleistet, daß der Innendurchmesser **a** der Bodenverfestigungsringe **5** und der Abstandselemente **6** größer ist als der maximale Außendurchmesser **b** von Tragrohr **2**, wie **Fig. 1** zeigt.

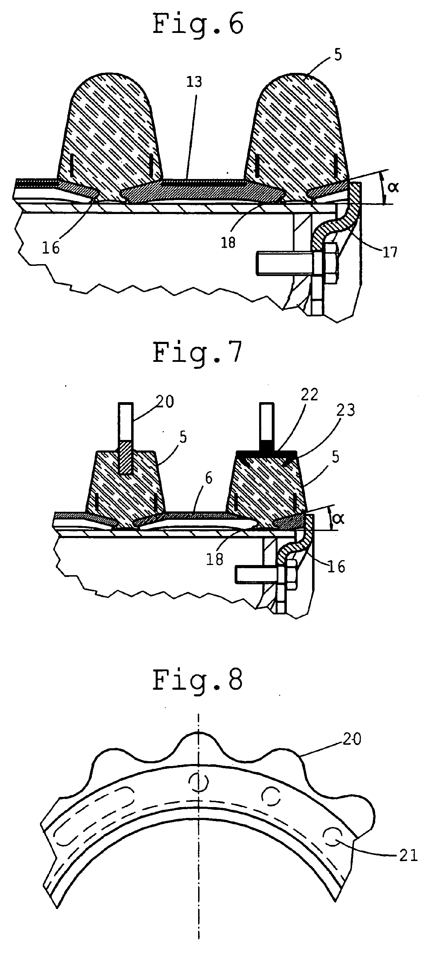

Die Bodenverfestigungsringe **5** bestehen aus Gummi oder aus einem elastisch verformbaren Kunststoff. Je nach Elastizität der Bodenverfestigungsringe **5** werden ein oder mehrere Versteifungsringe **11** aus einem härteren Material, vorzugsweise Stahl eingegossen, wie in **Fig. 2** dargestellt. Die Abstandselemente **6** bestehen aus Kunststoff, Gummi oder einem anderen elastisch verformbaren Material. Zur Versteifung der aus Gummi gefertigten Abstandselemente **6** sind Versteifüngselemente **13** aus einem härteren Material vorgesehen, wie dieses **Fig. 6** zeigt.

Die Bodenverfestigungsringe **5** und Abstandselemente **6** weisen im Kontaktbereich **7** zueinander eine konische Form auf, wobei der Keilwinkel α vom Außenkonus **9** der Abstandselemente **6** kleiner oder gleich dem Keilwinkel α vom Innenkonus **8** der Bodenverfestigungsringe **5** gestaltet ist.

Durch das axiale Verspannen nach dem abwechselnden Aufschieben der Bodenververfestigungsringe **5** und der Abstandselemente **6** auf das Tragrohr **2** mittels der Druckplatten **17** werden die Abstandselemente **6** am Konusende **18** im Tragrohrkontaktbereich **10** gegen den Außendurchmesser **b** des Tragrohres **2** gepreßt, wie in **Fig. 2** dargestellt.

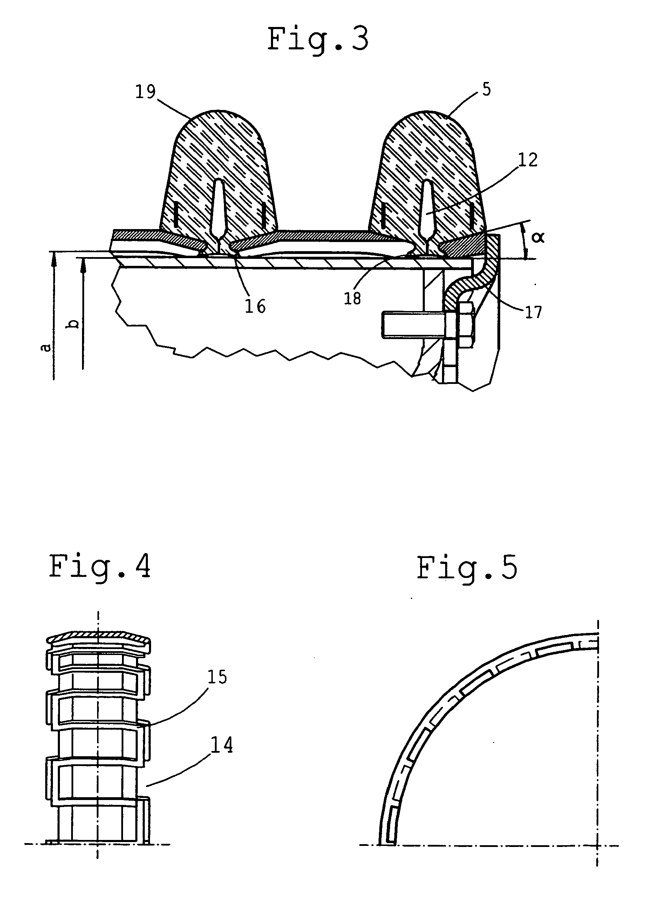

Zur besseren Verzahnung und Verpressung der Abstandselemente **6** und der Verfestigungsringe **5** mit dem Tragrohr **2** ist es vorteilhaft, die Abstandselemente **6** mit Materialaussparungen **14** und/oder Nasen **16** sowie mit Querstegen **15** zu versehen, wie in **Fig. 4** und **5** dargestellt.

Zur besseren Formanpassung beim Verpressen sind die Bodenverfestigungsringe **5** mit einem Hohlraum **12** versehen, wie in **Fig. 3** dargestellt. Am äußeren Umfangsbereich **19** weisen die Bodenverfestigungsringe **5** vorzugsweise eine abgerundete Form auf, wie in **Fig.1** dargestellt.

Damit die Bodenverfestigungsringe **5** eine bessere Verzahnung zum Boden bekommen, ist es vorteilhaft, wenn die Bodenverfestigungsringe **5** mit einem umlaufenden Nockenkranz **20** versehen sind, wobei der harte Nockenkranz **20** am Innendurchmeser einen Lochsteg **21** aufweist, wie in **Fig. 7** + 8 dargestellt. Vorteilhaft sind auch Bodenverfestigungsringe **5** mit einem umlaufenden Nockenring **22**, wobei der harte Nockenring **22** vorzugsweise durch die Krallen **23** mit dem weicheren Bodenverfestigungsring **5** verbunden ist, wie in Fig. 7 dargestellt.

### Bezugszeichenliste

- 1: Bodenwalze
- 2: Tragrohr
- 3: Tragrohrendplatte
- 4: Lagerung
- 5: Bodenverfestigungsring
- 6: Abstandselement
- 7: Kontaktbereich
- 8: Innenkonus
- 9: Außenkonus
- 10: Tragrohrkontaktbereich
- 11: Versteifungsringe
- 12: Hohlraum
- 13: Versteifungselement
- 14: Materialaussparungen
- 15: Quersteg
- 16: Nase
- 17: Druckplatte
- 18: Konusende
- 19: äußerer Umfangsbereich
- 20: Nockenkranz
- 21: Lochsteg
- 22: Nockenring
- 23: Krallen

- a: Innendurchmesser
- b: Außendurchmesser
- α: Keilwinkel

## Patentansprüche

1. Bodenwalze mit parallel umlaufenden Bodenverfestigungsringen, welche auf einem zentralen Tragrohr voneinander beabstandet angeordnet sind, wobei zwischen den Bodenverfestigungsringen (5) Abstandselemente (6) angeordnet sind, die im Außendurchmesser kleiner sind als die Bodenverfestigungsringe (5), **dadurch gekennzeichnet, daß** im Kontaktbereich (7) zwischen den Bodenverfestigungsringen (5) und den Abstandselementen (6) der Bodenverfestigungsring (5) einen Innenkonus (8) aufweist und das Abstandselement (6) einen Außenkonus (9) aufweist, und daß die Abstandselemente (6) beim axialen Verspannen mit den Bodenverfestigungsringen (5) am Innendurchmesser im Tragrohrkontaktbereich (10) gegen den Außendurchmesser (6) des Tragrohres (2) gedrückt werden.

2. Bodenwalze nach Anspruch 1, **dadurch gekennzeichnet, daß** die Abstandselemente (6) aus Kunststoff bestehen.

3. Bodenwalze nach Anspruch 1, **dadurch gekennzeichnet, daß** die Bodenverfestigungsringe (5) aus einem Gummi bestehen.

4. Bodenwalze nach Anspruch 1, **dadurch gekennzeichnet, daß** die Bodenverfestigungsringe (5) aus Kunststoff und/oder Metall bestehen.

5. Bodenwalze nach einem oder mehreren der vorgenannten Ansprüche, **dadurch gekennzeichnet, daß** in den Bodenverfestigungsringen (5) ein oder mehrere umlaufende Versteifungsringe (11) aus einem härteren Material angeordnet sind.

6. Bodenwalze nach einem oder mehreren der vorgenannten Ansprüche, **dadurch gekennzeichnet, daß** die Bodenverfestigungsringe (5) im Kern zum Innendurchmesser einen Hohlraum (12) aufweisen.

7. Bodenwalze nach einem oder mehreren der vorgenannten Ansprüche, **dadurch gekennzeichnet, daß** die Abstandselemente (6) aus Gummi bestehen und ein oder mehrere umlaufende Versteifungselemente (13) aufweisen.

8. Bodenwalze nach einem oder mehreren der vorgenannten Ansprüche, **dadurch gekennzeichnet, daß** der Abstand der Bodenverfestigungsringe (5) durch die Breite und/oder die Form der Abstandselemente (6) bestimmt wird.

9. Bodenwalze nach einem oder mehreren der vorgenannten Ansprüche, **dadurch gekennzeichnet, daß** der Innendurchmesser (a) der Bodenverfestigungsringe (5) und der Abstandselemente (6) größer ist als der maximale Außendurchmesser (b) des Tragrohres (2).

10. Bodenwalze nach einem oder mehreren der vorgenannten Ansprüche, **dadurch gekennzeichnet, daß** die Abstandselemente (6) im Bereich des Außenkonus (9) Materialaussparungen (14), Querstege (15) und/oder Nasen 16 aufweisen.

11. Bodenwalze nach einem oder mehreren der vorgenannten Ansprüche, **dadurch gekennzeichnet, daß** die Bodenverfestigungsringe (5) einen vorzugsweise harten umlaufenden Nockenkranz (20) aufweisen, welcher durch einen Lochsteg (21) mit dem weicheren Material der Bodenverfestigungsringe (5) verbunden ist.

12. Bodenwalze nach einem oder mehreren der vorgenannten Ansprüche, **dadurch gekennzeichnet, daß** die Bodenverfestigungsringe (5) einen harten umlaufenden Nockenring (22) aufweisen, welcher vorzugsweise durch die Krallen (23) mit dem weicheren Material der Bodenverfestigungsringe (5) verbunden ist.

## Claims

1. Ground roller having parallel surrounding ground compacting rings, which are arranged on a central mounting tube spaced apart from one another, wherein between the ground compacting rings (5) spacing elements (6) are arranged, which are of a smaller outer diameter than the ground compacting rings (5), **characterized in that** in the contact region (7) between the ground compacting rings (5) and the spacing elements (6) the ground compacting ring (5) has an inner cone (8) and the spacing element (6) has an outer cone (9), and that the spacing elements (6) when axially clamped to the ground compacting rings (5) on the inner diameter in the mounting tube contact area (10) are pressed against the outer diameter (b) of the mounting tube (2).

2. The ground roller according to Claim 1, **characterized in that** the spacing elements (6) consist of plastic.

3. The ground roller according to Claim 1, **characterized in that** the ground compacting rings (5) consist of a rubber.

4. The ground roller according to Claim 1, **characterized in that** the ground compacting rings (5) consist of plastic and/or metal.

5. The ground roller according to one or more of the preceding Claims, **characterized in that** one or more surrounding stiffening rings (11) made of a harder material are arranged in the ground compacting rings (5).

6. The ground roller according to one or more of the preceding Claims, **characterized in that** the ground compacting rings (5) have in the core towards the inner diameter a cavity (12).

7. The ground roller according to one or more of the preceding Claims, **characterized in that** the spacing elements (6) consist of rubber and have one or more surrounding stiffening elements (13).

8. The ground roller according to one or more of the preceding Claims, **characterized in that** the distance between the ground compacting rings (5) is determined by the width and/or the shape of the spacing elements (6).

9. The ground roller according to one or more of the preceding Claims, **characterized in that** the inner diameter (a) of the ground compacting rings (5) and of the spacing elements (6) is larger than the maximum outer diameter (b) of the mounting tube (2).

10. The ground roller according to one or more of the preceding Claims, **characterized in that** in the region of the outer cone (9) the spacing elements (6) have material indentations (14), transverse webs (15) and/or latches (16).

11. The ground roller according to one or more of the preceding Claims, **characterized in that** the ground compacting rings (5) have a, preferably hard, surrounding studded collar (20), which is joined to the softer material of the ground compacting rings (5) by means of a holed web (21).

12. The ground roller according to one or more of the preceding Claims, **characterized in that** the ground compacting rings (5) have a, preferably hard, surrounding studded ring (22), which is preferably joined to the softer material of the ground compacting rings (5) by means of the clamps (23).

## Revendications

1. Rouleau dameur avec des anneaux tournants de stabilisation du sol, qui sont disposés avec un écart mutuel sur un tube porteur central, des éléments écarteurs (6) dont le diamètre extérieur est inférieur à celui des anneaux de stabilisation du sol (5) étant disposés entre les anneaux de stabilisation du sol (5), **caractérisé en ce que** dans la zone de contact (7) entre les anneaux de stabilisation du sol (5) et les éléments écarteurs (6), l'anneau de stabilisation du sol (5) comporte un cône intérieur (8) et **en ce que** l'élément écarteur (6) comporte un cône extérieur (9) et **en ce que** lors de la contrainte axiale avec les anneaux de stabilisation du sol (5), sur le diamètre intérieur, dans la région de contact avec le tube porteur (10), les éléments écarteurs (6) sont pressés contre le diamètre extérieur (b) du tube porteur (2).

2. Rouleau dameur selon la revendication 1, **caractérisé en ce que** les éléments écarteurs (6) sont en matière plastique.

3. Rouleau dameur selon la revendication 1, **caractérisé en ce que** les anneaux de stabilisation du sol (5) sont en un caoutchouc.

4. Rouleau dameur selon la revendication 1, **caractérisé en ce que** les anneaux de stabilisation du sol (5), sont en matière plastique et/ou en métal.

5. Rouleau dameur selon l'une quelconque ou plusieurs des revendications précédentes, **caractérisé en ce que** un ou plusieurs anneaux de renfort (11) tournant(s) en une matière plus dure sont disposés dans les anneaux de stabilisation du sol (5).

6. Rouleau dameur selon l'une quelconque ou plusieurs des revendications précédentes, **caractérisé en ce que** les anneaux de stabilisation du sol (5), comportent dans le noyau par rapport au diamètre intérieur une cavité (12) .

7. Rouleau dameur selon l'une quelconque ou plusieurs des revendications précédentes, **caractérisé en ce que** les éléments écarteurs (6) sont en caoutchouc et comportent un ou plusieurs éléments de renfort (13) tournant (s) .

8. Rouleau dameur selon l'une quelconque ou plusieurs des revendications précédentes, **caractérisé en ce que** l'écart entre les anneaux de stabilisation du sol (5) est défini par la largeur et/ou par la forme des éléments écarteurs (6).

9. Rouleau dameur selon l'une quelconque ou plusieurs des revendications précédentes, **caractérisé en ce que** le diamètre intérieur (a) des anneaux de stabilisation du sol (5) et des éléments écarteurs (6) est supérieur au diamètre extérieur maximal (b) du tube porteur (2).

10. Rouleau dameur selon l'une quelconque ou plusieurs des revendications précédentes, **caractérisé en ce que** dans la région du cône extérieur (9), les éléments écarteurs (6) comportent des évidements de matière (14), des listels transversaux (15) et/ou des tenons (16) .

11. Rouleau dameur selon l'une quelconque ou plusieurs des revendications précédentes, **caractérisé en ce que** les anneaux de stabilisation du sol (5) comportent une couronne à ergots (20) tournante de préférence dure, qui par l'intermédiaire d'un listel perforé (21) est reliée avec la matière plus souple des anneaux de stabilisation du sol (5).

12. Rouleau dameur selon l'une quelconque ou plusieurs des revendications précédentes, **caractérisé en ce que** les anneaux de stabilisation du sol (5), comportent une couronne à ergots (22) tournante dure, qui est reliée de préférence par les griffes (23) avec la matière plus souple des anneaux de stabilisation du sol (5).
